Europäisches Patentamt

European Patent Office

Office européen des brevets

(11) Publication number: **0 084 957**
**A1**

(12) **EUROPEAN PATENT APPLICATION**

(21) Application number: 83300281.9

(22) Date of filing: **20.01.83**

(51) Int. Cl.³: **G 05 B 19/403**, G 05 B 19/40, B 25 J 9/00

(30) Priority: **23.01.82 JP 9178/82**

(43) Date of publication of application: **03.08.83** Bulletin 83/31

(84) Designated Contracting States: **DE FR GB**

(71) Applicant: **Fanuc Ltd, 5-1, Asahigaoka, 3-chome, Hino-shi, Tokyo 191 (JP)**

(72) Inventor: **Inaba, Hajimu, 5-3-16, Asahigaoka, Hino-shi Tokyo (JP)**
Inventor: **Torii, Nobutoshi, Fuyou-Haitsu 308 65-4, Takakura-cho, Hachioji-shi Tokyo (JP)**
Inventor: **Hiraizumi, Mitsuo, 581-16, Kitano-machi, Hachioji-shi Tokyo (JP)**

(74) Representative: **Billington, Lawrence Emlyn et al, HASELTINE LAKE & CO Hazlitt House 28 Southampton Buildings Chancery Lane, London WC2A 1AT (GB)**

(54) **Industrial robot control method and system therefor.**

(57) Disclosed are an industrial robot control method and system in which a robot controller (RBC) controls the motion of an industrial robot (RBT) having a plurality of controlled axes on the basis of a taught robot service program so as to cause the industrial robot (RBT) to render a predetermined service to a robot mate (MC1, MC2, MC3). The industrial robot control method comprises the steps of returning the industrial robot (RBT) to an operating reference point (PW) which is appointed at a position different from a machine origin (Pr) of the industrial robot (RBT), and starting the motion control of the industrial robot (RBT) from the operating reference point (PW) on the basis of the robot service program. The invention shortens the travelling distance of the industrial robot (RBT) and the operating period of time thereof required for executing the predetermined service, and facilitates the teaching operation of the industrial robot (RBT).

ACTORUM AG

INDUSTRIAL ROBOT CONTROL METHOD AND SYSTEM THEREFOR

The present invention relates to an industrial robot control method and system for controlling the motion of an industrial robot in order to perform an activity.

                                        may have
An industrial robot /   its operation controlled in accordance with a pre-taught robot service program.  That is, robot command data which constitute the robot service
                             may be
program stored in a memory   / successively read out item by item and the operation of the industrial robot controlled on the basis of the robot command data so as to perform the activities of workpiece change, tool change, chip removal, etc. for a machine tool.

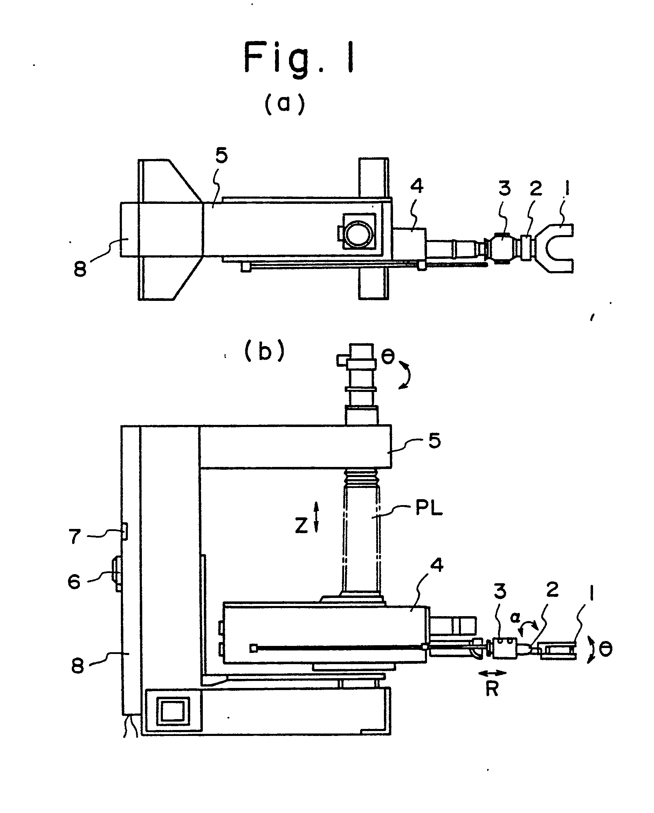

Figures 1(a) and 1(b) are a plan view and a side view, respectively, showing an example of an industrial robot which operates in a cylindrical coordinate system. Referring to the figures, numeral 1 denotes a mechanical hand for gripping, e.g., a workpiece when, say, it is to be exchanged.  A wrist 2, connected at one end to the hand 1, is capable of being swiveled ($\alpha$-axis) and bent up and down ($\beta$-axis).  The wrist 2 is connected at the other end thereof to an arm 3 which can be freely extended and retracted (R-axis).  A casing 4 receiving the arm 3 can

-2-

be moved vertically (Z-axis) along a shaft PL and rotated about the shaft PL (θ-axis). Numeral 5 denotes a frame, and 6 a teaching box for teaching robot motions. An operator's panel 7 is provided for manipulation by the operator, as well as a control unit 8 for storing, in succession, the data taught by the teaching box 6, such as operating positions (points), operating speed and the various services, and for controlling the motion of the mechanical hand 1, wrist 2, arm 3 and casing 4 in accordance with the taught data. The control unit 8 controls the respective controlled axes $\alpha$, $\beta$, R, $\theta$ and Z, thereby to operate the robot.

Such an industrial robot has a machine origin which is generally determined mechanically. After the introduction of power, the robot is reset at the machine origin by a predetermined zero return operation, thereby to bring the machine position into agreement with an actual position which is stored by an actual position register built in a robot controller. Thereafter, in a teach mode, a robot service program is taught by a teaching operation, or in a playback mode, the robot is caused to carry out a predetermined activity on the basis of the taught robot service program.

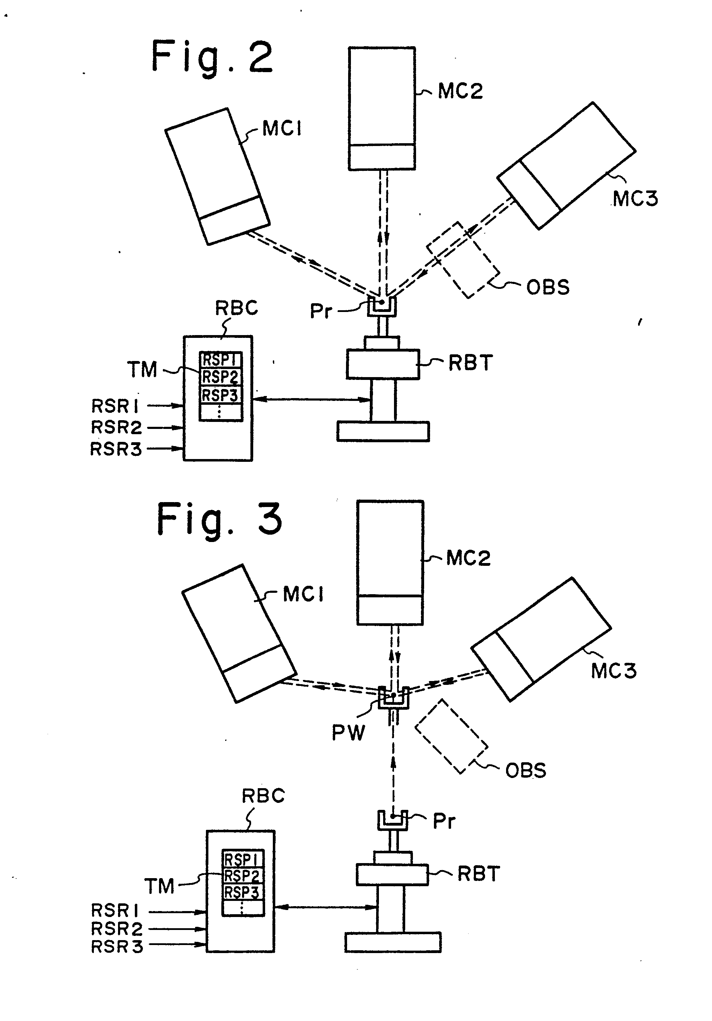

In this regard, in a case where a single industrial robot RBT performs activities for a plurality of machine tool MC1, MC2 and MC3 as shown in Figure 2, robot service programs RSP1, RSP2 and RSP3 are prepared for the respective activities and are stored in the teach memory TM of a robot controller RBC. The respective robot service programs RSP1 - RSP3 are drawn up so as to start and move the industrial robot RBT from a machine origin Pr and to cause it to serve the predetermined machine tools.

Accordingly, when a robot service request signal RSR1 is issued by the machine tool MC1, the industrial robot RBT starts and moves from the machine origin Pr and serves the machine tool MC1, and returns to the machine origin Pr after the end of the service, under the control of the robot service program RSP1. Likewise, when a robot service request signal RSR2 or RSR3 is issued by the machine tool MC2 or MC3, the robot starts from the machine origin Pr and returns thereto again at the end of the corresponding service.

In this manner, the prior-art industrial robot control method always repeats the operations of initiating the service from the machine origin Pr and returning the robot thereto again after the end of the service. The conventional method therefore is disadvantageous in view of the long distance of movement to the machine tool, namely the robot mate, resulting in lower robot service efficiency, and in view of the complex teaching operation. Particularly in such a case where an obstacle OBS lies as indicated by a broken line in Figure 2, the robot service program must be drawn up so as to avoid the obstacle. This lengthens the distance of movement still further and complicates the teaching operation even more.

According to one aspect of the present invention there is provided an industrial robot control method wherein an industrial robot having a plurality of controlled axes has its motion controlled on the basis of a robot service program so as to render a predetermined service to a robot mate, said industrial robot control method comprising the steps of;

(a) returning said industrial robot to an operating reference point which is appointed at a position different from a machine origin of said industrial robot, and

(b) starting the motion control of said industrial robot from said operating reference point so as to execute the predetermined service.

According to another aspect of the present invention there is provided an industrial robot control system having an industrial robot which has a plurality of controlled axes, and a robot controller which controls motion of the industrial robot so as to cause this industrial robot to render a predetermined service to a robot mate, said robot controller comprising:

a memory which stores a robot control program for controlling the motion of said industrial robot, and

a control unit which performs, when in use, a first control operation of returning said industrial robot to an operating reference point in accordance with an operating reference point return instruction, said operating reference point being appointed at a position different from a machine origin of said industrial robot, and a second control operation of starting the motion control of said industrial robot from the operating reference point in accordance with the robot control program so as to execute the predetermined service.

An example of the present invention may provide an industrial robot control method and system which can shorten the distance of movement of an industrial robot required for executing a predetermined service.

An example of the present invention may provide an 'industiral robot control method and system in which, even when an obstacle lies between the machine origin of an industrial robot and a mate thereof, an operation for avoiding the obstacle need not be taught, thereby facilitating the teaching operation of the robot.

An example of the present invention may provide an industrial robot control method and system which can shorten the distance of movement of an industrial robot so as to promptly execute a predetermined service.

An example of the present invention may provide an industrial robot control method and system which can shorten the distance of movement of an industrial robot so as to facilitate the teaching operation thereof.

An example of the present invention may provide an industrial robot control method and system which can execute a service over the shortest distance for each of a plurality of robot mates.

examples of
Features and advantages of/this invention will be apparent from the following description taken in connection with the accompanying drawings, in which:

Figures 1(a) and 1(b) are views for explaining an industrial robot which operates in a cylindrical coordinate system;

Figure 2 is a diagram for explaining a robot control operation in a prior art;

Figure 3 is a diagram for explaining an example of the present invention;

Figure 4 is a block diagram showing an embodiment of the present invention; and

Figure 5 is a diagram for explaining another/ example of the present invention.

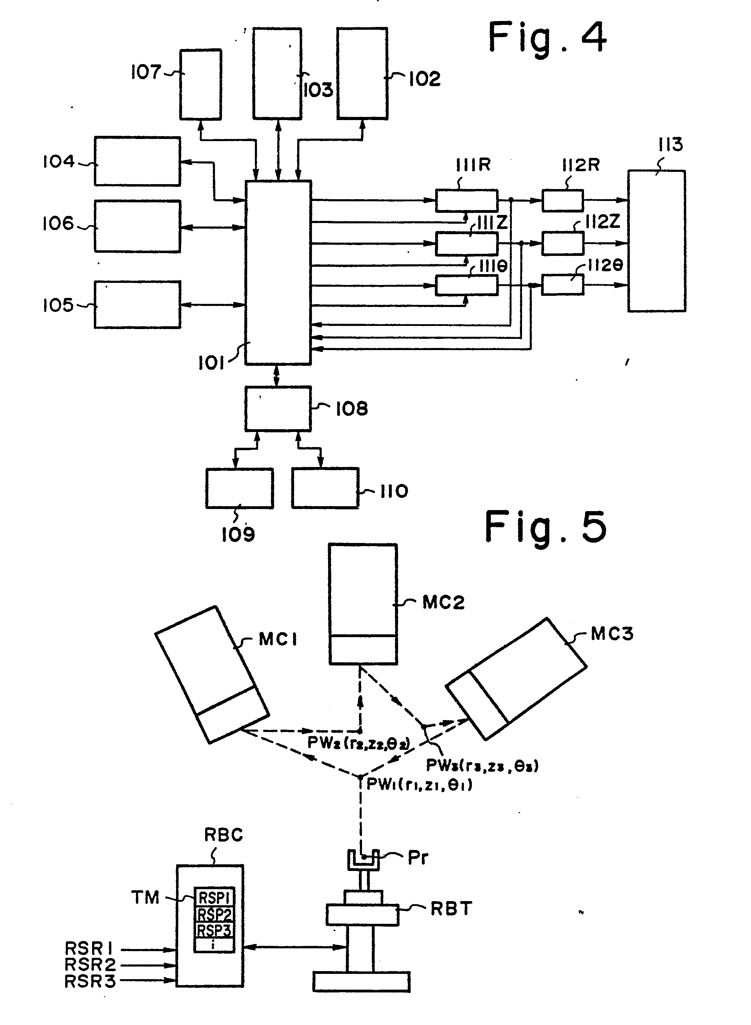

Figure 3 is a diagram for explaining an example of the present invention. The same parts as in Figure 2 are assigned the same symbols, and will not be described in detail again.

According to/ this example of the present invention, an operating reference point $Pw$ to be used as the reference of robot motions, for example, the starting point of activities, is provided separately from the machine origin $Pr$, and the industrial robot RBT is positioned (reset) once at the operating reference point $Pw$ so as to start from the operating reference point $Pw$ and perform a service for each of the machine tools MC1 - MC3. This measure dispenses with resetting the industrial robot RBT at the machine origin $Pr$ upon the end of each service thereby shortening the distance travelled by the robot, as well as / shortening the period of time of an activity, and simplifying the teaching operation.

Figure 4 is a block diagram of an arrangement for practicing the present invention.

Referring to the figure, numeral 101 indicates an arithmetic unit which is constructed of a microprocessor or the like. A control program memory 102 stores a control program. A teach memory 103 stores the robot service programs RSP1, RSP2 and RSP3 for the respective pre-taught activities. An operating reference point register 104 stores the coordinate values (Rw, Zw, $\Theta$w) of the preset operating reference point Pw in the cylindrical coordinate system. An actual position register 105 stores the actual position (Ra, Za $\Theta$a) of the industrial robot, and is updated by one step in the positive or negative direction in accordance with the moving direction of the industrial robot each time distributed pulses Rp, Zp and $\Theta$p in the directions of the R-, Z- and $\Theta$-axes are generated by pulse distributors to be described later. A remaining movement value register 106 stores remaining movement values (Rr, Zr, $\Theta$r). When a move command has been given by the robot service program and incremental values $\Delta$R, $\Delta$Z and $\Delta\Theta$ for the respective axes have been calculated by the arithmetic unit 101, these incremental values $\Delta$R, $\Delta$Z and $\Delta\Theta$ for the respective axes are stored as the remaining movement values Rr, Zr, and $\Theta$r in the remaining movement value register 106. Moreover, each time the distributed pulses Rp, Zp and $\Theta$p are generated by the pulse distributors, the contents of the register 106 are decremented by one step. Shown at numeral 107 is a reset sequence register in which the sequence of the controlled axes to be reset is set when an operating reference point return instruction is issued. An interface circuit 108 governs the exchange of data between external equipment and the robot controller, and is connected to a teaching box 109 as well as an operator's panel 110. Symbols 111R, 111Z and 111$\Theta$ denote the aforementioned pulse distributors for the R-, Z- and $\Theta$-axes, respectively. The respective pulse distributors 111R, 111Z and 111$\Theta$ are supplied with the incremental values $\Delta R$, $\Delta Z$ and $\Delta \Theta$ delivered from the arithmetic unit 101, execute pulse distribution computations on the basis of these incremental values and provide the distributed pulses Rp, Zp and $\Theta$p. Symbols 112R, 112Z and 112$\Theta$ denote well-known servo control circuits, which servo-control the motors of the controlled axes of a robot 113 in accordance with the numbers of the distributed pulses from the corresponding pulse distributors. The arithmetic unit 101 performs various control operations under the control of the control program and robot service program. By way of example, when robot command data are move command data, the arithmetic unit 101 computes the incremental values $\Delta R$, $\Delta Z$ and $\Delta \Theta$ and supplies them to the pulse distributors 111R, 111 Z and 111$\Theta$ for the respective axes. In addition, when a single distributed pulse Rp, Zp or $\Theta$p is produced, the arithmetic unit 101 subjects the content Rr, Zr or $\Theta$r of the remaining movement value register 106 to the operations:

-10-

$(Rr - 1) \rightarrow Rr$, $(Zr - 1) \rightarrow Zr$, or $(\Theta r - 1) \rightarrow \Theta r$ ..(1) to update the content of this register. Simultaneously, it subjects the content Ra, Za or $\Theta$a of the actual position register 105 to the operations:

$(Ra \pm 1) \rightarrow Ra$, $(Za \pm 1) \rightarrow Za$, or $(\Theta a \pm 1) \rightarrow \Theta a$ ... (2) to update the content of this register. Regarding expression (2), the addition is executed for the positive moving direction, and the subtraction for the negative moving direction. Further, upon deciding that the remaining movement value register 106 has the contents of $Rr = 0$, $Zr = 0$ and $\Theta r = 0$, the arithmetic unit 101 delivers pulse distribution end signals DENR, DENZ and DEN$\Theta$ to the pulse distributors 111R, 111Z and 111$\Theta$ of the respective axes and stops the pulse distribution computations thereof. Still further, when the operating reference point return instruction is issued by the robot service program, the arithmetic unit 101 executes the operations:

$(Rw - Ra) \rightarrow \Delta R$, $(Zw - Za) \rightarrow \Delta Z$ and $(\Theta W - \Theta a) \rightarrow \Delta \Theta$ ...(3) on the basis of the contents of the operation reference point register 104 and the actual position register 105, to deliver these incremental values $\Delta R$, $\Delta Z$ and $\Delta \Theta$ to the pulse distributors 111R, 111Z and 111$\Theta$ of the respective axes. The arithmetic unit 101 executes other robot control operations and teaching control operations as well.

The operation of the arrangement of the embodiment in Figure 4 will now be described. It is assumed that the robot service programs, the coordinate values (Rw, $z$w, $\Theta$w) of the operating reference point, and the sequences of the controlled axes to be reset have been respectively stored in the teach memory 103, the operating reference point register 104, and the reset sequence register 107 in advance.

When, after the return of the robot to the origin, an automatic operation mode has been commanded by the teaching box 109 and the robot service request signal RSRl has been received from the machine tool MCl (Figure 3), the arithmetic unit 101 reads out robot motion data from the teach memory 103 in successive fashion, the robot motion data constituting the robot service program RSPl which corresponds to the robot service request signal RSRl. Robot control is thus initiated. More specifically, when the robot command data indicate the operating reference point return instruction G28, the operations of expression (3) are executed. The resulting incremental values $\Delta R$, $\Delta Z$ and $\Delta \Theta$ are successively delivered to the pulse distributors 111R, 111Z and 111$\Theta$ of the respective axes on the basis of the content of the reset sequence register 107, and are also set in the remaining movement value register 106 as the remaining movement values Rr, Zr and $\Theta$r. When the reset sequence is the order of the R-axis, Z-axis and $\Theta$-axis, the incremental value $\Delta R$ is first delivered to the pulse distributor 111R. Then, the pulse distributor 111R executes the pulse distribution operation on the basis of $\Delta R$ and provides the distributed pulses Rp. These pulses are impressed upon the servo control circuit 112R, which actuates the R-axial driving motor of the robot to reset the robot at an operating reference point for the R-axis. The distributed pulses Rp are also applied to the arithmetic unit 101, in which the operations of expressions (1) and (2) are executed. When the contents of the remaining movement value register 106 and the actual position register 105 have respectively become $Rr = 0$ and $Ra = \Delta R$ owing to this operation, the arithmetic unit 101 provides the R-axial pulse distribution end signal DENR to stop the pulse distribution operation of the pulse distributor 111R, and also delivers the Z-axial incremental value $\Delta Z$ to the pulse distributor 111Z. Thenceforth, as in the case of the R-axis, the distribution end signals DEN are produced with the operations of resetting the robot at operating reference points for the Z- and $\theta$-axes, until the robot is reset at the operating reference points of the respective axes. Subsequently, the arithmetic unit 101 reads out the next robot item of command data from the teach memory 103 and initiates a robot motion for a predetermined service. Thereafter, controls based on such robot command data are performed in succession. When the operating reference point return instruction has been finally read out again, control similar to the foregoing is performed to return the robot to the operating reference point Pw (Figure 3). The foregoing ends the activities for the machine tool MC1 based on the robot service program RSP1.

When, under these conditions, the robot service request signal RSR2 is issued from the machine tool MC2 or the robot service request signal RSR3 from the machine tool MC3, the robot starts from the operating reference point Pw and serves the machine tool MC2 or MC3 just as described above.

The above corresponds to the case where only the operating reference point return instruction G28 is included in the robot service program and where the operating reference point (Rw, Zw, $\Theta$w) is separately set alterably by means of the external equipment (for example, the teaching box 109 or the operator's panel 110). However, the coordinates of the operating reference point may also be commanded along with the operating reference point return instruction G28, as follows:

$$G28 \quad R\square\square..\square \quad Z \;\Delta\Delta \; ... \; \Delta \quad \Theta \;oo \; .. \; o \qquad ....(4)$$

Moreover, the operating reference point return instruction not only can be included in the robot service operation but can be commanded from the external equipment. Further, the sequence for resetting the controlled axes to the operating reference points is not restricted to that of R, Z and $\Theta$, but can be changed at will. Besides, the controlled axes may be reset to the operating reference point at the same time.

In the case where the coordinates of the operating reference point are included in the operating reference point return instruction in advance as given by Expression (4), operating reference point return instructions having different operating reference point coordinates may well be inserted in the robot motion command programs prepared for the respective activities. Figure 5 is a diagram for explaining such case, in which portions similar to those shown in Figure 3 are assigned the same reference characters. Reference characters $Pw_1$, $Pw_2$ and $Pw_3$ in Figure 5 denote operating reference points, respectively.

$$G28 \ Rr_1, \ Zz_1, \ \theta\theta_1$$

is commanded at the beginning of the robot service program $RSP_1$, and

$$G28 \ Rr_2, \ Zz_2, \ \theta\theta_2$$

is commanded at the end thereof. In addition,

$$G28 \ Rr_3, \ Zz_3, \ \theta\theta_3$$

is commanded at the end of the robot service program $RSP_2$. Further,

$$G28 \ Rr_1, \ Zz_1, \ \theta\theta_1$$

is commanded at the end of the robot service program $RSP_3$. In the case of Figure 5, the operating reference point position most recently commanded becomes an operating reference point position to be used thenceforth. Further, when the coordinate(s) of the operating reference point(s) of one axis or two axes has (have) been indicated by the operating reference point return instruction, the coordinate values of the operating reference points of the other axes are as commanded before.

According to the/present invention set forth above, examples of the the distance of movement of an industrial robot required for the activity thereof, namely the period of time for the activity, can be shortened, and the teaching operation of the robot can be conducted in a simple manner.

-15-

While the above description has referred to the case where the robot serves a plurality of machine tools, the present invention is also applicable to a case where the robot serves a single machine tool.

CLAIMS :

1. An industrial robot control method wherein an industrial robot having a plurality of controlled axes has its motion controlled on the basis of a robot service program so as to render a predetermined service to a robot mate, said industrial robot control method comprising the steps of;

(a) returning said industrial robot to an operating reference point which is appointed at a position different from a machine origin of said industrial robot, and

(b) starting the motion control of said industrial robot from said operating reference point so as to execute the predetermined service.

2. An industrial robot control method according to claim 1, wherein step (a) is a step which is carried out in accordance with an operating reference point return instruction included in said robot service program.

3. An industrial robot control method according to claim 1, wherein step (a) is a step which is carried out in accordance with an operating reference point return instruction applied externally.

4. An industrial robot control method according to claim 1, wherein step (a) is a step which returns said industrial robot to the operating reference point appointed externally.

5. An industrial robot control method according to claim 1, wherein step (a) is a step which is carried out in accordance with an operating reference point return instruction and which returns said industrial robot to the appointed position of the operating reference point included in said operating reference point return instruction.

6. An industrial robot control method according to claim 1, wherein step (a) is a step which controls the motion of said industrial robot on the basis of a difference between an actual position of said industrial robot and the position of the operating reference point, to return said industrial robot to said operating reference point.

7. An industrial robot control method according to claim 1, further comprising a step of selecting a corresponding one of the robot service programs in compliance with a request signal from any of a plurality of robot mates.

8. An industrial robot control method according to claim 7, wherein step (a) is a step which is carried out in accordance with an operating reference point return instruction included in the selected robot service program.

9. An industrial robot control method according to claim 7, wherein step (a) is a step which returns said industrial robot to the operating reference point position included in the robot service program selected at a preceding service.

10. An industrial robot control method according to claim 1, wherein step (a) is a step in which, in returning said industrial robot to the operating reference point, said plurality of controlled axes are controlled to be reset in an appointed sequence.

0084957

-18-

11. An industrial robot control system having an industrial robot which has a plurality of controlled axes, and a robot controller which controls motion of the industrial robot so as to cause this industrial robot to render a predetermined service to a robot mate, said robot controller comprising.

a memory which stores a robot control program for controlling the motion of said industrial robot, and

a control unit which performs/a first control [when in use,] operation of returning said industrial robot to an operating reference point in accordance with an operating reference point return instruction, said operating reference point being appointed at a position different from a machine origin of said industrial robot, and a second control operation of starting the motion control of said industrial robot from the operating reference point in accordance with the robot control program so as to execute the predetermined service.

12. An industrial robot control system according to claim 11, further comprising a register which stores the operating reference point position.

13. An industrial robot control system according to claim 11, wherein said memory stores the robot control program including the operating reference point return instruction.

14. An industrial robot control system according to claim 13, wherein said memory stores the robot control program including the operating reference point return instruction which includes data indicative of the position of the operating reference point.

15. An industrial robot control system according to claim 11, further comprising an actual position register which stores an actual position of said industrial robot, the control unit performing said first control operation on the basis of a difference between the actual position in said actual position register and the appointed position of the operating reference point.

16. An industrial robot control system according to claim 11, further comprising a sequence register which stores a resetting sequence of said plurality of controlled axes of said industrial robot.

17. An industrial robot control system according to claim 11, wherein said memory stores a plurality of robot service programs corresponding to a plurality of robot mates, and said control unit selects the corresponding robot control programs in compliance with request signals from said plurality of robot mates.

18. An industrial robot control system according to claim 17, wherein said memory stores the robot service program including the operating reference point return instruction.

0084957

1/3

Fig. 1

(a)

(b)

0084957

2/3

# Fig. 2

# Fig. 3

0084957

Fig. 4

Fig. 5

0084957

**European Patent Office**

## EUROPEAN SEARCH REPORT

Application number

EP 83 30 0281

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | FR-A-2 375 641 (McDONNELL DOUGLAS)<br><br>* Page 22, line 15 - page 23, line 15 *<br><br>--- | 1-3,6<br>8,11-<br>13,15,<br>17,18 | G 05 B 19/403<br>G 05 B 19/40<br>B 25 J 9/00 |
| Y | US-A-4 178 632 (ANTHONY)<br><br>* Column 2, line 31 - column 3, line 2 *<br><br>--- | 1-3,6<br>8,11-<br>13,15,<br>17,18 | |
| Y | US-A-3 842 330 (KOLELL)<br><br>* Abstract; column 5, line 16 - column 6, line 57 *<br><br>----- | 1-3,6<br>8,11-<br>13,15,<br>17,18 | TECHNICAL FIELDS SEARCHED (Int. Cl. 3)<br><br>G 05 B<br>B 25 J |

The present search report has been drawn up for all claims

| Place of search | Date of completion of the search | Examiner |
|---|---|---|
| THE HAGUE | 15-04-1983 | KOLBE W.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82